# EUROPEAN PATENT SPECIFICATION

(11) **EP 1 759 355 B1**
(45) Date of publication and mention of the grant of the patent: **28.11.2007**
(21) Application number: 05745514.9
(22) Date of filing: 09.06.2005
(51) Int. Cl.: G06T 15/20

(54) **A FORWARD TEXTURE MAPPING 3D GRAPHICS SYSTEM**
VORWÄRTS-TEXTURABBILDUNGS-3D-GRAPHIKSYSTEM
SYSTEME GRAPHIQUE EN 3D AVEC MAPPAGE DE TEXTURE AVANT

(30) Priority: 16.06.2004 EP 04102745
(43) Date of publication of application: 07.03.2007
(73) Proprietor: NXP B.V., 5656 AG Eindhoven (NL)
(72) Inventor: MEINDS, Kornelis, NL-5656 AA Eindhoven (NL)
(74) Representative: Röggla, Harald
(86) International application number: PCT/IB2005/051896
(87) International publication number: WO 2005/124692

(56) References cited:
- KUNII T L ET AL: "Parallel polygon rendering on the graphics computer VC-1" PARALLEL ALGORITHMS/ARCHITECTURE SYNTHESIS, 1995. PROCEEDINGS., FIRST AIZU INTERNATIONAL SYMPOSIUM ON FUKUSHIMA, JAPAN 15-17 MARCH 1995, LOS ALAMITOS, CA, USA,IEEE COMPUT. SOC, 15 March 1995 (1995-03-15), pages 2-9, XP010139376 ISBN: 0-8186-7038-X
- BUCKELEW M ED - INSTITUTE OF ELECTRICAL AND ELECTRONICS ENGINEERS: "REALIZM GRAPHICS" PROCEEDINGS OF IEEE COMPCON '97. SAN JOSE, FEB. 23 - 26, 1997, LOS ALAMITOS, IEEE COMP. SOC. PRESS, US, 23 February 1997 (1997-02-23), pages 192-197, XP000751782 ISBN: 0-8186-7805-4
- MEINDS K ET AL: "Resample Hardware for 3D Graphics" EUROGRAPHICS WORKSHOP ON GRAPHICS HARDWARE, 2002, pages 17-27, XP002259239 cited in the application
- MEIDS K., STOUT J. AND VAN OVERVELD K.: "Real-time temporal anti-aliasing for 3D graphics" PROC. OF THE VISION, MODELING AND VISUALIZATION CONFERENCE, 21 November 2003 (2003-11-21), pages 337-344, XP009052888 Munich, Germany cited in the application

## Description

### Field of the invention

The invention relates to a forward texture mapping 3D graphics processor, a graphics adapter comprising the 3D graphics processor, a computer comprising the 3D graphics processor, and a display apparatus comprising the 3D graphics processor.

### Background of the invention

A forward texture mapping (further referred to as FTM) 3D graphics processor is known from the publication "Resample Hardware for 3D Graphics" of Koen Meinds and Bart Barenbrug, Procedings of Graphics Hardware 2002, pages 17-26, Thomas Ertl, Wolfgang Heindrich and Michael Dogget (Editors).

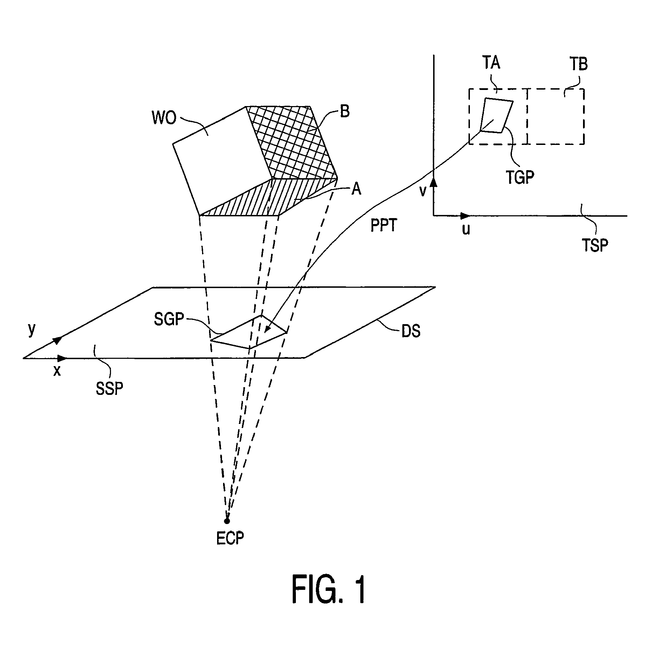

The known FTM is elucidated in detail with respect to Figs. 1, 2 and 3. Such a FTM system is able to generate data for display on a display screen at a particular display rate depending on the available amount of recourses such as memory bandwidth and computational power. A higher display rate requires a higher amount of these resources and the complete FTM processing has to be adapted to be able to provide this higher display rate.

### Summary of the invention

It is an object of the invention to provide a FTM system that requires less resources and/or computational power to provide a higher display rate. The invention is defined by the independent claims. Advantageous embodiments are defined in the dependent claims.

The forward texture mapping 3D graphics processor in accordance with the invention comprises a texture memory to store texel intensities at texture space grid positions. Thus, the texel intensities stored in the texture memory correspond to texture space grid positions. A plurality of mappers map a particular texel within a texture space polygon to corresponding screen space positions at corresponding different display instants along a path of motion corresponding to the temporal interval which occurs between two successive sample instants of the geometry data. The particular texel has a particular texture space grid position and a particular texel intensity. The different positions of the screen space polygons depend on the mapping transformation (i.e. viewing transformation) from world space, or another space, possibly eye space, to screen space and the motion information indicating the motion in the world space or another space such as the eye space at corresponding different instants along the same temporal interval. For example, the corresponding screen space positions may depend on motion information of the polygon in world or eye space and the vertex positions of the screen space polygons at the different display instants along a path of motion in the screen space according to the path of motion in the world (eye) space and a viewing transformation for the associated display instant. Corresponding screen space resamplers determine contributions of the texel intensities at the corresponding screen space positions to surrounding screen grid positions at the corresponding different display instants. A texture space polygon is a polygon in the textures space, and a screen space polygon is a polygon in the screen space.

Thus, for each one of the different display instants a rendering is performed based on the same particular polygon in the texture space and the same texture but to different positions of the associated screen space polygon. Consequently, although the frame rate of the output image data is up-sampled with a factor equal to the number of display instants, the data rate towards the texture memory is not increased because the same texture data can be used at each one of the display instants.

In contrast, in the prior art the output frame rate (determined by the number of display instants) and the input frame rate (determined by the sampling instants of geometry and texture data) are identical and thus if the output frame rate is up-sampled with a particular factor, the input data has to be provided with a rate which is the same factor higher, and also the texture fetch rate increases with the same factor. The invention provides a FTM system which is able to render several frames on the basis of motion data and a single sampling of the 3D geometry data and texture data.

In an embodiment, the motion information comprises motion data that can be used to determine the path of motion of the polygon in the screen space within the temporal interval. The vertices of the polygon(s) and the mapping of texels to screen space can be determined from this path of motion.

In an embodiment, the motion information is a displacement vector that indicates a displacement of the vertices of the polygon in the world (or other, for example eye) space between two sample instants. From this information, the displacement in screen space can be determined. The displacement at a particular one of the display instants can be determined by (for example, linearly) interpolating the displacement defined by the displacement vector.

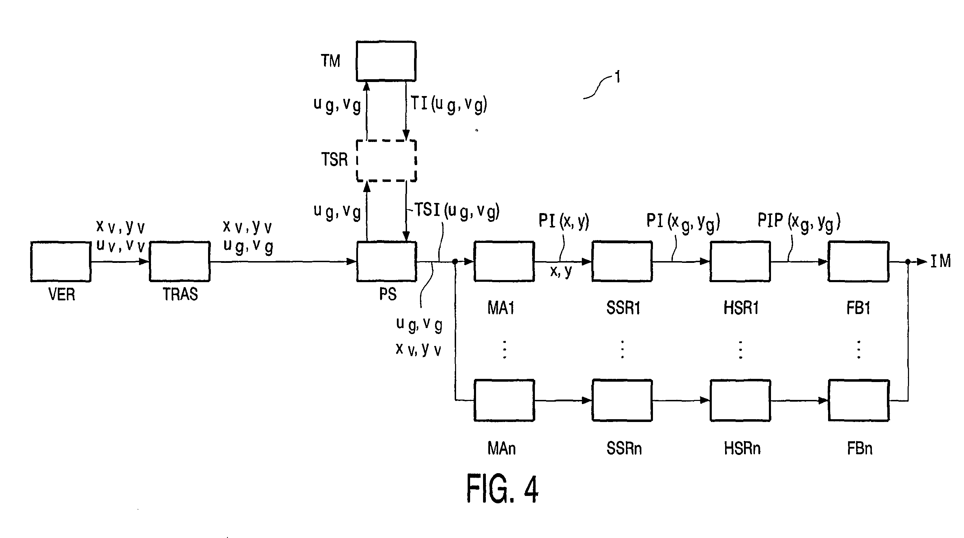

In an embodiment, motion data is used in the form of two modelview matrices one for the current instant and one for the previous instant. Modelview matrices are known from the publication by Koen Meinds, Jan Stout and Kees van Overveld with the title "Real-time temporal anti-aliasing for 3D graphics", Proceedings of VMV, pp. 337-344, Munich, Germany, November 19-21, 2003. The modelview matrix, as known from OpenGL, is used to transform vertex coordinates of polygons form model space to eye space. With the two matrices, a motion path in eye space (or another space) can be determined. The parameters of the mapping functions of the mappers for different display instants between two successive sample instants can be determined from this information. Thus, with these parameters, the mappers map texel coordinates to associated different positions on screen to be stored in associated frame buffers for associated display instants, after the texel color is being processed with the associated screen space resamplers and hidden surface removal units as indicated in Fig. 4.

This is a robust and efficient method to obtain displacement vectors in the eye space (or world space or another space). To determine the eye space displacement vectors, the vertices of the previous frame can be subtracted from the vertices of the current frame. Thus, the 3D system calculates the coordinates of the eye space vertices for both the current frame instant and the previous frame instant. The 3D application needs to send, next to the normal modelview matrix an additional modelview matrix for the previous frame instant. The application may buffer the modelview matrices to efficiently resend them. The geometry transformation unit of the 3D system applies both modelview matrices to transform each vertex to a "current" and a "previous" position in eye space.

In an embodiment, the motion information is provided by the 3D application. Alternatively, although more complex, the FTM 3D graphics processor may determine the motion information from the geometry data, for example the vertices of the screen space polygons, received.

In an embodiment, the FTM processor comprises a plurality of frame buffers for storing the intensities that are determined at the screen grid positions. Each frame buffer stores a rendered image at a particular one of the display instants. Thus, by reading out and displaying all the frame buffers sequentially during a single temporal interval, the frame rate up-conversion is obtained.

In an embodiment, the FTM processor controls the mappers to perform an identical mapping to the frame buffers for non-moving objects. In fact only one of the mappers needs to perform the mapping and the output obtained this way is copied to all the frame buffers.

These and other aspects of the invention are apparent from and will be elucidated with reference to the embodiments described hereinafter.

### Brief description of the drawings

In the drawings:
Fig. 1 shows a display of a 3D object on a display screen,
Fig. 2 shows a block diagram of a prior art forward texture mapping 3D graphics system,
Figs. 3A and 3B illustrate the operation of the forward texture mapping,
Fig. 4 shows a block diagram of the forward texture mapping 3D graphics system in accordance with an embodiment of the invention,
Figs. 5A and 5B illustrate the operation of the embodiment of the forward texture mapping system as shown in Fig. 4,
Fig. 6 shows a computer comprising the forward texture mapping system, and
Fig. 7 shows a display apparatus comprising the forward texture mapping system.

### Detailed description of the preferred embodiment

Fig. 1 elucidates display of a 3D object WO in world space on a display screen DS. Instead of the world space the object may also be available in other 3D spaces such as model or eye space or another space (including screen space), in the following all these spaces are referred to as world space. An object WO, which may be a three-dimensional object such as the cube shown, is projected on the two-dimensional display screen DS. A surface structure or texture defines the appearance of the three-dimensional object WO. In Fig. 1 the polygon A has a texture TA and the polygon B has a texture TB. The polygons A and B are with a more general term also referred to as graphics primitives.

The projection on to the display screen DS of the object WO is obtained by defining an eye or camera position ECP within the world space. Fig. 1 shows how the polygon SGP projected on the screen DS is obtained from the corresponding polygon A. The polygon SGP in the screen space SSP is defined by its vertex coordinates in the screen space SSP. It is only the geometry of the polygon A that is used to determine the geometry of the polygon SGP. Usually, it suffices to know the vertices of the polygon A to determine the vertices of the polygon SGP.

The texture TA of the polygon A is not directly projected from the real world onto the screen space SSP. The different textures of the real world object WO are stored in a texture map memory or texture space TSP defined by the coordinates u and v. For example, Fig. 1 shows that the polygon A has a texture TA which is available in the texture space TSP in the area indicated by TA, while the polygon B has another texture TB which is available in the texture space TSP in the area indicated by TB. The polygon A is projected on the texture space TA to obtain a polygon TGP such that when the texture present within the polygon TGP is projected on the polygon A the texture of the real world object WO is obtained or at least resembled as much as possible. A perspective transformation PPT between the texture space TSP and the screen space SSP projects the texture of the polygon TGP on the corresponding polygon SGP. This process is also referred to as texture mapping. Usually, the textures are not all present in a global texture space, but every texture defines its own texture space.

It has to be noted that the textures in the texture space are stored in a texture memory for a discrete number of positions in the texture space. Usually, these discrete positions are the grid positions in the texture space determined by integer values ofu and v. These discrete grid positions are further referred to as grid texture positions or grid texture coordinates. Positions in the u,v space which are not limited to the grid positions are referred to as positions in the u,v space or as positions in the texture space TSP. The positions in the u,v space may be represented by floating point numbers. In a same manner, the image to be displayed is stored in a frame buffer memory. Again, only a discrete number of positions in the x,y space or screen space SSP is available. Usually, these discrete positions are the grid positions in the screen space SSP determined by integer values of x and y. These discrete grid positions are referred to as grid screen positions or grid screen coordinates. Positions in the x,y space which are not limited to the grid positions are referred to as positions in the x,y space or as positions in the screen space SSP. These positions in the x,y space may be represented by floating point numbers.

In the now following, the term graphics primitive indicates a polygon (such as polygon A) in the world space, or the polygon SGP in the screen space SSP, or the polygon TGP in the texture space TSP. It is clear from the context which graphics primitive is meant.

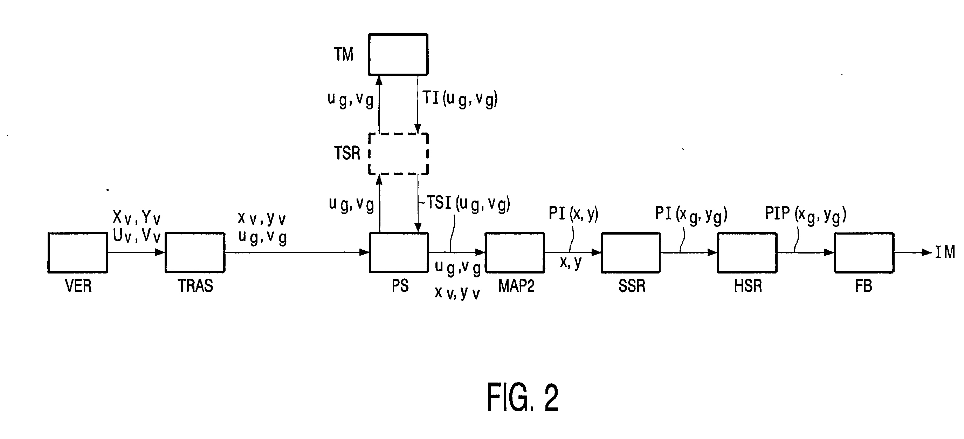

Fig. 2 shows a block diagram of a prior art forward texture mapping 3D graphics system. The vertex transformation and lighting unit VER, further referred to as the vertex T&L unit, transforms the vertex coordinates of the polygons A in world space to the screen space SSP and performs light calculations to determine an intensity (also referred to as color) per vertex. If a texture is to be applied to a polygon, the vertex T&L unit receives texture space coordinates from the application. The vertex T&L unit supplies the screen space coordinates xᵥ,yᵥ and the texture space coordinates uᵥ,vᵥ of the vertex coordinates such that the position of the vertices in the screen space SSP and the texture space TSP, respectively, is known. Usually, the positions of the vertices will not coincident with the screen space or texture space grid positions, respectively.

The texture space rasterizer TRAS determines the grid positions u_{g},v_{g} of the texels in the texture space TSP within the polygon determined by the texel space coordinates uᵥ,vᵥ of the vertices of the polygon. Similarly to the screen space rasterizer SRAS of an inverse texture mapping system, the texture space rasterizer TRAS could map every grid texture coordinate to screen space positions. However, this is not required for the pixel shader PS, which now operates on grid texture coordinates, and thus the (u_{g},v_{g}) to (x,y) mapping can be delayed in the processing pipeline until the screen space resampler SSR which does require the (xy) grid screen positions.

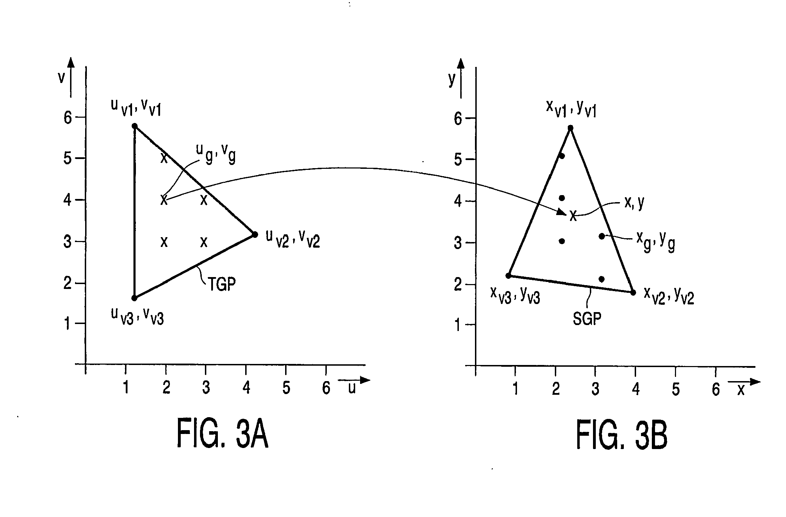

The pixel shader PS determines the intensity TSI (also referred to as color) of a texel. Thus, in a forward texture mapping system, the pixel shader PS is actually a texel shader. But, it is referred to as the pixel shader PS because its functionality is identical to the pixel shader PS used in the inverse texture mapping system. The pixel shader PS may be a dedicated or a programmable unit. The pixel shader PS receives a set of attributes per pixel, including the grid texture coordinates u_{g},v_{g} of the texel. The grid texture coordinates u_{g},v_{g} are used to address texture data TI on grid texture positions stored in the texture memory TM via the optional texture space resampler TSR. The texture data corresponding to the texel grid position u_{g},v_{g} is indicated by TI(u_{g},v_{g}). The pixel shader PS may modify the texture coordinate data u_{g},v_{g} and may apply and combine several texture maps on a same texel. It also may perform shading without the use of texture data on basis of a formula such as the well known Gouraud and Phong shading techniques. In fig. 3, by way of example, it is assumed that the pixel shader PS supplies the texel intensity TSI(u_{g}, v_{g}) to the mapper MAP2.

It has to be noted that because a forward texture mapping system can traverse on a texture grid it may bypass the texture space resampler TSR. The texture space resampler TSR may be relevant in that it avoids that the texture space rasterizer TSR2 traverses on a courser grid than the screen grid if texture magnification is used, and thus avoids polygon edge artifacts. Also, if multiple textures are applied to the same polygon, the texture space resampler TSR might be used for obtaining texture values on the (u,v) grid coordinates of the first texture while traversing in-between texture positions on a secondary or higher order texture when the texture space rasterizer TRAS traverses on the grid of a first texture.

The mapper MAP2 maps the texel position u_{g}, v_{g} of which the texel intensity TSI(u_{g},v_{g}) has been determined to a screen space position x,y.

The screen space resampler SSR uses the texel intensity TSI(u_{g},v_{g}) which is mapped to in-between screen space position x,y to determine the contribution to the pixel intensities PI(x_{g},y_{g}) in an area around (x,y). In fact, this is the inverse operation as performed in the inverse texture mapping system. In the inverse texture mapping system several texture intensities TI(u_{g}i,v_{g}i) on texture grid positions u_{g}i,v_{g}i are weighted to obtain a single intensity PI(u,v) on a texture position u,v associated to a grid screen position. In a forward texture mapping system, a single texel intensity TSI(x,y) is added to several pixels on grid positions x_{g},y_{g}, in a weighted fashion. Or said differently, a texel value TSI(u_{g},v_{g}) mapped to screen space is splatted to several pixels (which inherently are positioned on the x,y grid). When all texels TSI that affect the pixel intensity PI(x_{g},y_{g}) at a grid position x_{g},y_{g} have contributed, the final pixel intensity PI(x_{g},y_{g}) is obtained.

The hidden surface removal unit HSR, usually includes a Z-buffer which enables determination of the visible colors on a per pixel basis. The depth value z of a produced pixel value is tested against the depth value of the one stored in the Z-buffer at the same pixel screen coordinate x_{g},y_{g} (thus on the screen grid). Depending on the outcome of the test, the pixel intensity or color PIP(x_{g},y_{g}) is written into the frame buffer FB and the Z-buffer is updated. The image to be displayed IM is read from the frame buffer FB.

Figs. 3A and 3B illustrate the operation of the forward texture mapping system. Fig. 3A shows the texel space polygon TGP in the texture space. The vertices of the polygon TGP are indicated by the texture space positions uᵥ₁,vᵥ₁;uᵥ₂,vᵥ₂;uᵥ₃,vᵥ₃ which usually do not coincide with the texture space grid positions u_{g},v_{g}. The texture space grid positions u_{g},v_{g} are the positions which have integer values for u and v. The texture space grid positions u_{g},v_{g} within the polygon TGP are indicated by crosses. The texture space rasterizer TRAS rasterizes the texture in the texture space TSP to obtain the texture space grid positions u_{g},v_{g} within the polygon TGP or within an area just around the polygon TGP. The texture space rasterizer TRAS may operate on several resolutions of a texture (MIP-maps), and may switch multiple times from MIP-map across polygon. The shader PS retrieves the intensities on the texture space grid positions u_{g},v_{g}. The mapper MAP2 maps the texture grid positions u_{g},v_{g} to x,y positions in the screen space, see Fig. 3B. Usually, these mapped x,y positions do not coincident with the screen space grid positions x_{g},y_{g}. The grid positions x_{g},y_{g} are the positions which have integer values for x and y.

Fig. 3B shows the screen space polygon SGP in the screen space SSP. The vertices of the polygon SGP are indicated by the screen positions xᵥ₁,yᵥ₁;xᵥ₂,yᵥ₂;xᵥ₃ yᵥ₃ which usually do not coincide with the screen space grid positions x_{g}, y_{g}. The image to be displayed is determined by the intensities (color and brightness) of the pixels which are positioned on the screen space grid positions x_{g},y_{g}. The mapped x,y position is indicated by a cross. The screen space resampler SSR splats the texel's intensity on the surrounding pixel grid positions x_{g},y_{g} of the mapped x, y position to obtain the contribution of the corresponding texel intensity on the pixel grid positions x_{g},y_{g}. The intensity of a pixel corresponding to a particular grid position x_{g},y_{g} is the sum of the contributions of all mapped texel intensities which contribute to the intensity on this particular grid position x_{g},y_{g}.

Fig. 4 shows a block diagram of the forward texture mapping 3D graphics system 1 in accordance with an embodiment of the invention.

The vertex transformation and lighting unit VER, the texture space rasterizer TRAS, the pixel shader PS, the optional texture space resampler TSR and the texture memory TM are identical to the corresponding items in Fig. 2. Also their operation is identical to that elucidated with respect to Fig. 2.

The mapper MAP2, the screen space resampler SSR, the hidden surface removal HSR and the frame buffer BF of Fig. 2 are replaced by a plurality of mappers MA1 to MAn, a plurality of screen space resamplers SSR1 to SSRn, a plurality of hidden surface removal units HSR1 to HSRn, and a plurality of frame buffers FB1 to FBn. Each of these items operates in the same manner as elucidated with respect to Fig. 2.

The invention is directed to increasing the frame rate by rendering several frames on the basis of motion data and a single sampling of the 3D geometry data. The motion data and the 3D geometry data are supplied by the 3D application, which may be a 3D game, a VRML browser, a 3D user interface, a MPEG 4 visual renderer, visiophony or another 3D application. The geometry data comprises the polygons, which describe the shape of the models, and property data that describes the appearance, such as color and shading information including state changes of the 3D pipeline (for example, fragment operation mode, light-model). The motion data is data that describes the path of motion between two sampling intervals of the geometry. The time period between two sampling instants is referred to as the frame period Tf. But more generally this time period is referred to as the temporal interval Tf. The motion data can be used to obtain a motion path that may be described with a displacement vector that indicates the displacement of the vertices of the polygon from the previous sampling instant to the present sampling instant. However, the motion data may be a more advanced description of the motion path, such as, for example, curves described with conics, composite curves, Bezier curves, B-spline curves, or rational polynomials. The mapping function of each mapper MP1 to MPn is determined from the motion path for the associated instants. Preferably, the application should supply the motion data together with the geometry data. However, in special cases it is also possible to detect the motion data from the geometry data at different instants.

Thus, the same 3D data of the polygons, such as the texture space coordinates, world space coordinates and colors, and the same texture can be used for the several renderings during a temporal interval Tf. Consequently, the fetching of the geometry data of the polygons, the rasterization of the polygons TGP in the texture space TSP, and the fetching of the texture data from the texture memory TM need to occur only once per temporal interval Tf. Therefore, the vertex transformation and lighting unit VER, the texture space rasterizer TRAS, the pixel shader PS, the optional texture space resampler TSR and the texture memory TM are identical to the corresponding items in Fig. 2.

The mapper MAP 2, the screen space resampler SSR, the hidden surface removal unit HSR, and the frame buffer FB of Fig. 2 have to be replaced by a plurality of corresponding mappers MP1 to MPn, screen space resamplers SSR1 to SSRn, hidden surface removal units HSR1 to HSRn, and frame buffers FB1 to FBn to obtain a plurality of pipelines. The number of pipelines required is equal to the number of times the frame rate is upconverted, for example, for a doubling of the frame rate of the display image, two pipelines are required. The different pipelines may be obtained by adding hardware, but, alternatively the same hardware may be used to perform the operations sequentially.

Each rendering is performed for a different instant during the temporal interval. For example, if the frame rate is doubled, two renderings have to be performed for two successive sampling instants of the input data. Each mapper MP 1 to MPn maps the texture grid coordinates u_{g},v_{g} to screen space coordinates x,y at a different one of the instants. These mappings are different because the polygons SGP are moving in the screen space due to the movement of the model. The mapped screen space coordinates x,y supplied by each mapper MP1 to MPn are supplied to an associated one of the screen space resamplers SSR1 to SSRn. The screen space resamplers SSR1 to SSRn, the hidden surface removal units HSR1 to HSRn, and the frame buffers FB1 to FBn of each one of the pipelines operates in the same manner as elucidated with respect to Fig. 2. A particular one of the pipelines provides the screen space image at a particular one of the different (rendering) instants.

The parameters to set-up the different mappers MP 1 to MPn might be calculated by the texture space rasterizer TRAS using the motion data. The FTM shown in Fig. 4 stores, for a single sampling of the 3D model, pixels for consecutive frame instants along the motion path in separate frame buffers FB1 to FBn. The consecutive frame instants or display instants are determined by the current sampling of the geometry. Because the polygons TGP are rendered to several frame buffers FB1 to FBn, multiple hidden surface units HSR1 to HSRn are required. To facilitate this each one of the hidden surface units HSR1 to HSRn may comprise a so-called Z-buffer.

It has to be noted that in the prior art, the sampling period of the input data defined by the geometry data and the textures, and the frame period of the output image stored in the frame buffer FB and to be displayed on a display screen have the same duration. A higher frame rate of the display image is only possible by increasing the sampling rate of the input data.

In the FTM in accordance with the present invention, the sampling period of the input data can be the same as that of the prior art, while a higher frame rate of the display image can be obtained. Alternatively, the same frame rate of the display image as in the prior art may be obtained with a lower frame rate of the input data. Off course, it is also possible to obtain in-between values of the input frame rate and the output frame rate.

If the frame rate of the display image is increased with a particular factor in the prior art FTM, the data traffic to the texture memory TM has to increase with the same factor. This is especially a burden when the texture memory TM is an external memory which is connected to the rest of the FTM circuit with a bus, because data traffic to the texture memory often is the performance bottleneck of a 3D system. The required bandwidth of this bus has to increase with the particular factor. In the FTM in accordance with the present invention, the data traffic of the texture memory TM is not dependent on this factor. The decrease of the texture data traffic across the bus is important because in current 3D graphics pipelines, especially for tile-based renderers (such as IMG's Power VR accelerators) this data traffic may be a performance and power dissipation bottleneck. A secondary advantage is that the rasterization requires less computational performance than in the prior art if the prior art is used to produce a higher frame rate. Less rasterizers TRAS or a less powerful rasterizer suffices. Also, less powerful pixel shaders PS are required.

Thus, for the up-sampling technique in accordance with the invention, either several resources have to be provided a number of times, or time multiplexing, or a combination of multiplication of hardware resources and time multiplexing has to be used.

The time multiplexing of the screen space rasterizer SSR1 to SSRn function depends on its implementation. If a one-pass resampler with a 2D filter is used, no states have to be stored and time multiplexing is easy. However, the one-pass resampler requires more bandwidth to the frame buffer (or tile buffer in a tile base rendering system). In a two-pass resampler which uses two 1D resamplers, the state of the vertical resampler has to be stored for each sample of an input line. This requires a couple of line memories with length equal to the frame buffer width. If tile based rendering is used, however, this length is equal to the width of the tile. Thus, time multiplexing the screen space resampler SSR1 to SSRn using two-pass resampling with tile based rendering only requires multiplying the relatively small sized line memories.

The traditional hidden surface removal units HSR1 to HSRn use a Z-buffer with the size of a frame or a tile. This is state information that has to be duplicated when time multiplexing this function. In case of tile based rendering the tile size is relatively small and can even be made smaller for optimal use in the present frame rate up-conversion technique.

Objects in the input image which do not move may be rendered once and copied (with Z-test) to all frame buffers FB1 to FBn which are associated to a sequence of display instants. Objects which contain motion are rendered to all frame buffers FB1 to FBn by using the different mappings as described before.

Preferably, for the texture data traffic saving technique in accordance with the present invention, the current most popular 3D graphics APIs (Open GL, Direct3D) are extended to support motion data submitted by the 3D application. To solve this, API extensions can be defined and possibly included in next versions of the API.

The latency of the generated frames on user input is according to the (lower) sampling rate of the input data. For latency critical applications, such as games the sampling rate of the input data must not be chosen to low. For example, for games with a desired frame rate of 60Hz an up-conversion factor of 2 or 4 (input data sampled at respectively 30 or 15 Hz) might be acceptable whereas higher up-conversion factors might cause to long latencies.

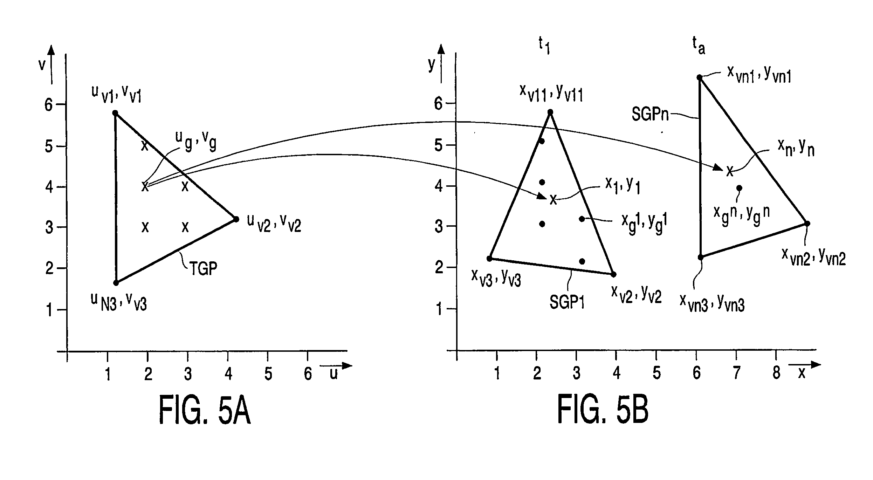

Figs. 5A and 5B illustrate the operation of the embodiment of the forward texture mapping system as shown in Fig. 4. Fig. 5A is identical to Fig. 3A and thus is not further elucidated. Fig. 5A shows the single texture space polygon TGP. Fig. 5B shows two of the n positions of the screen space polygons SGP1 to SGPn associated to the single texture space polygon TGP and occurring at n different instants t1 to tn. These different instants t1 to tn are also referred to as the display instants. The frame rate up-conversion factor is equal to the number of display instants in a temporal interval Tf. The screen space polygons SGP1 to SGPn have different positions in the screen space SSP because the object is moving. The vertices of the texture space polygon TGP and the screen space polygons SGP1 to SGPn may be supplied by the 3D application. The vertices of the screen space polygons SGP1 to SGPn may be determined from the vertices of the world space polygon of the current sampling instant and mapped to screen space with an associated mapper MP1 to MPn, whose mapping function is according to associated instant on the motion path.

Fig. 5B shows the polygon SGP1 which is identical to the polygon SGP shown in Fig. 3B. The polygons SGP1 and SGPn both are mapped from the same source polygon from world space, only another mapping has been used according to the associated instant along the motion path. The polygon SGPn shows the screen position at the display instant tn. For the sake of clarity, if present (n>2) the in-between positions are not shown. The texture position u_{g},v_{g} is mapped to the position x1,y1 at the instant t1 and to the position xn,yn at the instant tn. In accordance with the prior art FTM, the intensity information of the texel at the texture position u_{g},v_{g} is splatted in a known manner to the surrounding x_{g}1,y_{g}1 and x_{g}n,y_{g}n screen space grid coordinates, respectively.

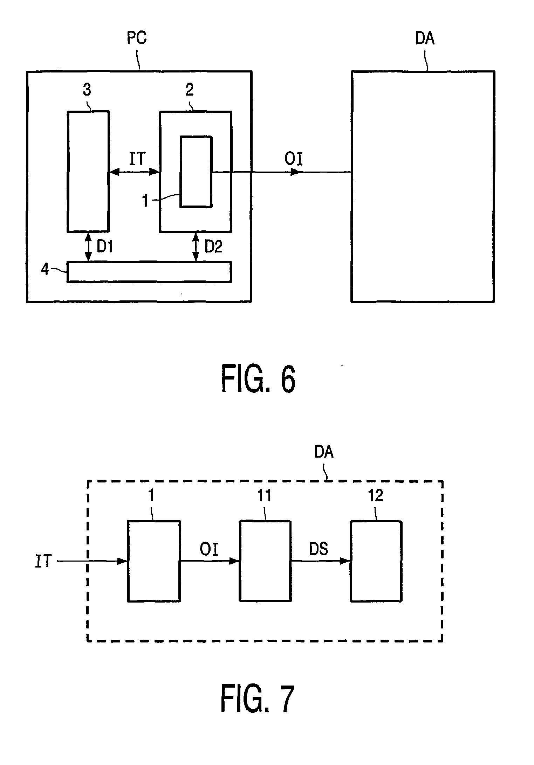

Fig. 6 shows a computer comprising the forward texture mapping system. The computer PC comprises a processor 3, a graphics adapter 2 and a memory 4. The processor 3 is suitably programmed to supply input data II to the graphics adapter 2. The processor 3 communicates with the memory 4 via the bus D1. The graphics adapter 2 comprises the FTM system 1. Usually, the graphics adapter is a module that is plugged into a suitable slot (for example an AGP slot). Usually, the graphics adapter comprises its own memory (for example the texture memory TM and the frame buffer FB). However the graphics adapter may use part of the memory 4 of the computer PC, now the graphics adapter need to communicate with the memory 4 via the bus D2 or via the processor 3 and the bus D1. The graphics adapter 2 supplies the output image OI via a standard interface to the display apparatus DA. The display apparatus may be any suitable display, such as, for example, a cathode ray tube, a liquid crystal display, or any other matrix display.

The computer PC and the display DA need not be separate units which communicate via a standard interface but may be combined in a single apparatus, such as, for example, a personal digital assistant (PDA or pocket PC) or any other mobile device with a display for displaying images.

Fig. 7 shows a display apparatus comprising the forward texture mapping system. The display apparatus DA comprises the FTM pipeline 1 which receives the input data (geometry plus related data) II and supplies the output image OI to a signal processing circuit 11. The signal processing circuit 11 processes the output image OI to obtain a drive signal DS for the display 12.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A forward texture mapping 3D graphics processor comprising:
a texture memory (TM) for storing texel intensities TI(u_{g},v_{g}) of texture space grid positions (u_{g},v_{g}),
a plurality of mappers (MA1, ... MAn) for mapping a particular texel within a texture space polygon (TGP) to corresponding screen space positions (x1,y1, ..., xn,yn) at corresponding different display instants (t1, ...,tn) in a temporal interval (Tf) occurring between two successive sample instants of geometry data defining a screen space polygon (SGP) being associated with the texture space polygon (TGP), the particular texel having a particular texture space grid position (u_{g},v_{g}) and a particular texel intensity TI(u_{g},v_{g}), wherein the corresponding screen space positions (x1,y1, ..., xn,yn) depend on motion information of the screen space polygon (SGP) at different instants (t1, ...,tn) in the temporal interval (Tf), and
corresponding screen space resamplers (SSR1, ..., SSRn) for determining a contribution of the texel intensities TI(u_{g},v_{g}) at the corresponding screen space positions (x1,y1, ..., xn,yn) to surrounding screen grid positions (x_{g}1,y_{g}1, ..., x_{g}n,y_{g}n) at the corresponding different instants (t1, ...,tn).

2. A forward texture mapping 3D graphics processor as claimed in claim 1, wherein the motion information comprises motion data describing a path of motion within the temporal interval (Tf).

3. A forward texture mapping 3D graphics processor as claimed in claim 1, wherein the motion information comprises a displacement vector indicating a displacement of vertices (xᵥ11,yᵥ11;xᵥ12,yᵥ12;xᵥ13,yᵥ13) of the screen space polygon (SGP) at a previous sample instant and vertices (xᵥn1,yᵥn1;xᵥn2,yᵥn2;xᵥn3,yᵥn3) of the screen space polygon (SGP) at a current sample instant.

4. A forward texture mapping 3D graphics processor as claimed in claim 1, the motion data comprises two modelview matrices, one for a current sample instant of the geometry data and texture data and one for a previous sample instant.

5. A forward texture mapping 3D graphics processor as claimed in claim 1, wherein the motion information is received from a 3D application.

6. A forward texture mapping 3D graphics processor as claimed in claim 1, further comprising a plurality of frame buffers (FB1, ...,FBn) for storing intensities PI(x_{g},y_{g}) being determined at the screen grid positions (x_{g}1,y_{g}1, ..., x_{g}n,y_{g}n).

7. A forward texture mapping 3D graphics processor as claimed in claim 5, wherein the plurality of mappers (MA1, ... MAn) is arranged for identically mapping non moving objects at the corresponding different instants (t1, ...,tn) to the plurality of frame buffers (FB1, ...,FBn).

8. A graphics adapter comprising the forward texture mapping 3D graphics processor of claim 1.

9. A computer comprising the forward texture mapping 3D graphics processor of claim 1.

10. A display apparatus comprising the forward texture mapping 3D graphics processor of claim 1.

## Patentansprüche

1. 3D-Grafikprozessor zum Vorwärts-Textur-Mapping
mit einem Textur-Speicher (TM) zum Speichern von Texel-Intensitäten TI(u_{g}, v_{g}) von Textur-Space-Gitterpositionen (u_{g}, v_{g}),
mit einer Mehrzahl von Mapping-Einrichtungen (MA1, ... MAn) zum Mapping eines bestimmten Texels innerhalb eines Textur-Space-Polygons (TGP) an entsprechenden Screen-Space-Positionen (x1, y1, ..., xn, yn) zu entsprechenden, verschiedenen Anzeigezeitpunkten (t1, ..., tn) in einem zeitlichen Intervall (Tf), das zwischen zwei aufeinanderfolgenden Abtastzeitpunkten von geometrischen Daten auftritt, die ein Screen-Space-Polygon (SGP) definieren, das dem Textur-Space-Polygons (TGP) zugeordnet ist, wobei das bestimmte Texel eine bestimmte Textur-Space-Gitterposition (u_{g}, v_{g}) und eine bestimmte Texel-Intensität TI(u_{g}, v_{g}) aufweist, wobei die entsprechenden Screen-Space-Positionen (x1, y1, ..., xn, yn) von der Bewegungsinformation des Screen-Space-Polygons (SGP) an verschiedenen Zeitpunkten (t1, ..., tn) in dem zeitlichen Intervall (Tf) abhängen, und
mit entsprechenden Screen-Space-Resamplern (SSR1, ..., SSRn) zum Bestimmen eines Beitrages von Texel-Intensitäten TI(u_{g}, v_{g}) an den entsprechenden Screen-Space-Positionen (x1, y1, ..., xn, yn) an die umgebenden Screen-Gitterpositionen (x_{g}1, y_{g}1, ..., x_{g}n, y_{g}n) zu den entsprechenden verschiedenen Zeitpunkten (t1, ..., tn).

2. 3D-Grafikprozessor zum Vorwärts-Textur-Mapping nach Anspruch 1, **dadurch gekennzeichnet, dass** die Bewegungsinformation Bewegungsdaten enthält, die einen Bewegungspfad innerhalb des zeitlichen Intervalls (Tf) beschreiben.

3. 3D-Grafikprozessor zum Vorwärts-Textur-Mapping nach Anspruch 1, **dadurch gekennzeichnet, dass** die Bewegungsinformation einen Verlagerungsvektor enthält, der eine Verlagerung von Vertices (xᵥ11, yᵥ11; xᵥ12, yᵥ12; xᵥ13, yᵥ13) des Screen-Space-Polygons (SGP) zu einem vorhergehenden Abtastzeitpunkt und Vertices (xᵥn1, yᵥn1; xᵥn2, yᵥn2 ; xᵥn3, yᵥn3) des Screen-Space-Polygons (SGP) zu einem aktuellen Abtastzeitpunkt anzeigt.

4. 3D-Grafikprozessor zum Vorwärts-Textur-Mapping nach Anspruch 1, **dadurch gekennzeichnet, dass** die Bewegungsdaten zwei Model-View-Matrizen enthalten, eine für einen aktuellen Abtastzeitpunkt der geometrischen Daten und der Textur-Daten und einen für einen vorhergehenden Abtastzeitpunkt.

5. 3D-Grafikprozessor zum Vorwärts-Textur-Mapping nach Anspruch 1, **dadurch gekennzeichnet, dass** die Bewegungsinformation von einer 3D-Anwendung empfangen wird.

6. 3D-Grafikprozessor zum Vorwärts-Textur-Mapping nach Anspruch 1, weiter **gekennzeichnet durch** eine Mehrzahl von Rahmenpuffern (FB1, ..., FBn) zum Speichern von Intensitäten PI(x_{g}, y_{g}), die an den Screen-Gitterpositionen (x_{g}1, y_{g}1,..., x_{g}n, y_{g}n) bestimmt werden.

7. 3D-Grafikprozessor zum Vorwärts-Textur-Mapping nach Anspruch 5, **dadurch gekennzeichnet, dass** die Mehrzahl von Mapping-Einrichtungen (MA1, ... MAn) angeordnet ist zum identischen Mapping von nicht-bewegten Objekten zu den entsprechenden unterschiedlichen Zeitpunkten (t1, ..., tn) an die Mehrzahl von Rahmenpuffern (FB1, ..., FBn).

8. Grafik-Adapter mit dem 3D-Grafikprozessor zum Vorwärts-Textur-Mapping nach Anspruch 1.

9. Computer mit dem 3D-Grafikprozessor zum Vorwärts-Textur-Mapping nach Anspruch 1.

10. Anzeigeeinrichtung mit dem 3D-Grafikprozessor zum Vorwärts-Textur-Mapping nach Anspruch 1.

## Revendications

1. Processeur graphique 3D de placage de texture avant comprenant :
- une mémoire de textures (TM) pour la mémorisation d'intensités de texel TI(u_{g},v_{g}) de positions sur la grille de l'espace texture (u_{g},v_{g}),
- une pluralité de dispositifs de placage (MA1, ..., MAn) pour le placage d'un texel particulier situé à l'intérieur d'un polygone de l'espace texture (TGP) à des positions dans l'espace écran (x1,y1, ..., xn,yn) correspondantes à des instants d'affichage différents (t1, ..., tn) correspondants dans un intervalle de temps (Tf) survenant entre deux instants d'échantillonnage successifs de données géométriques définissant un polygone de l'espace écran (SGP) associé au polygone de l'espace texture (TGP), le texel particulier ayant une position sur la grille de l'espace texture (u_{g},v_{g}) particulière et une intensité de texel TI(u_{g},v_{g}) particulière, dans lequel les positions dans l'espace écran (x1,y1, ..., xn,yn) correspondantes dépendent des informations de mouvement du polygone de l'espace écran (SGP) à différents instants (t1, ..., tn) dans un intervalle de temps (Tf), et
- des rééchantillonneurs d'espace écran (SSR1, ..., SSRn) correspondants pour la détermination d'une contribution des intensités de texel TI (u_{g},v_{g}) à des positions dans l'espace écran (x1,y1, ..., xn,yn) correspondant aux positions sur la grille d'écran périphériques (x_{g}1,y_{g}1, ..., x_{g}n,y_{g}n) aux instants différents (t1, ..., tn) correspondants.

2. Processeur graphique 3D de placage de texture avant selon la revendication 1, dans lequel les informations de mouvement comprennent des données de mouvement décrivant une trajectoire de mouvement à l'intérieur de l'intervalle de temps (Tf).

3. Processeur graphique 3D de placage de texture avant selon la revendication 1, dans lequel les informations de mouvement comprennent un vecteur de déplacement indiquant un déplacement des sommets (xᵥ11,yᵥ11 ; xᵥ12,yᵥ12 ; xᵥ13,yᵥ13) du polygone de l'espace écran (SGP) à un instant d'échantillonnage précédent et des sommets (xᵥn1,yᵥn1 ; xᵥn2,yᵥn2 ; xᵥn3,yᵥn3) du polygone de l'espace écran (SGP) à un instant d'échantillonnage présent.

4. Processeur graphique 3D de placage de texture avant selon la revendication 1, dans lequel les données de mouvement comprennent deux matrices modèle-vue, l'une pour un instant d'échantillonnage présent des données géométriques et des données de texture et l'autre pour un instant d'échantillonnage précédent.

5. Processeur graphique 3D de placage de texture avant selon la revendication 1, dans lequel les informations de mouvement sont reçues d'une application 3D.

6. Processeur graphique 3D de placage de texture avant selon la revendication 1, comprenant en outre une pluralité de tampons d'image (FB1, ..., FBn) pour la mémorisation d'intensités PI(x_{g},y_{g}) déterminées aux positions sur la grille d'écran (x_{g}1, y_{g}1, ..., x_{g}n, y_{g}n).

7. Processeur graphique 3D de placage de texture avant selon la revendication 5, dans lequel la pluralité de dispositifs de placage (MA1, ..., MAn) est conçue pour plaquer de façon identique des objets immobiles à des instants différents (t1, ..., tn) correspondants dans la pluralité de tampons d'image (FB1, ..., FBn).

8. Carte graphique comprenant le processeur graphique 3D de placage de texture avant selon la revendication 1.

9. Ordinateur comprenant le processeur graphique 3D de placage de texture avant selon la revendication 1.

10. Appareil d'affichage comprenant le processeur graphique 3D de placage de texture avant selon la revendication 1.
